# EUROPEAN PATENT APPLICATION

(11) **EP 3 633 886 A1**
(43) Date of publication of application: **08.04.2020**
(21) Application number: 19209458.9
(22) Date of filing: 12.11.2010
(51) Int. Cl.: H04J 3/06, H04W 28/22

(54) **CONTROL SIGNALING IN WIRELESS COMMUNICATIONS**

(30) Priority: 13.11.2009 US 26116809 P; 15.01.2010 US 29557810 P
(62) Divisional of application: 10785254.3
(71) Applicant: InterDigital Patent Holdings, Inc., Wilmington, DE 19809 (US)
(72) Inventor: GRANDHI, Sudheer A., Pleasanton, CA 94588 (US)
(74) Representative: AWA Sweden AB

(57) **Abstract**

Disclosed herein are methods, apparatus, and systems related to control and management signaling. A wireless transmit/receive unit (WTRU) may exchange control and/or management signaling with a second WTRU via a wireless network. The wireless network may be based on, for example, a technology such as Institute of Electrical and Electronics Engineers (IEEE) 802.11ac or IEEE 802.11ad. The control and/or management signaling may relate to features such as power control, time and/or frequency synchronization, resource allocation, Channel State Information (CSI) feedback, beamforming, link adaptation, multi-channel transmission, Multi-User Multiple Input and Multiple Output (MU-MIMO), WTRU group assignments, or other features. The control and/or management signaling may be performed using Medium Access Control (MAC) frames, and/or other messages.

## Description

### CROSS REFERENCE TO RELATED APPLICATIONS

This application claims the benefit of U.S. Provisional Patent Application No. 61/261,168, filed on November 13, 2009, and U.S. Provisional Patent Application No. 61/295,578, filed on January 15, 2010, each of which is hereby incorporated by reference as if fully set forth herein.

### BACKGROUND

In a wireless communication system, control and management signaling may be used to coordinate between the devices in the system. For example, control and/or management signaling may be used to indicate when and how devices are permitted to communicate with other devices in the system. As new wireless communications systems are developed, they may includes new approaches to Multi-User Multiple Input and Multiple Output (MU-MIMO), link adaptation, time synchronization, multi-channel parallel transmission/reception, modulation, coding, and/or other features. Many wireless communication systems, however, do not adequately address how control and management signaling related to these features should be performed. Therefore, new approaches to control and management signaling are required.

### SUMMARY

Disclosed herein are methods, apparatus, and systems related to control and management signaling. A wireless transmit/receive unit (WTRU) may communication control and/or management information to and/or from a second WTRU via a wireless network. The wireless network may be based on, for example, a technology such as Institute of Electrical and Electronics Engineers (IEEE) 802.11ac , IEEE 802.11ad, or other technology. The control and/or management information may relate to features such as power control, time and/or frequency synchronization, resource allocation, Channel State Information (CSI) feedback, beamforming, link adaptation, multi-channel transmission, Multi-User Multiple Input and Multiple Output (MU-MIMO), WTRU group assignments, and/or other features. The control and/or management information may be included in Medium Access Control (MAC) frames, and/or in other messages. The control and/or management information may be included in a Very High Throughput (VHT) control field. In an instance where the control and/or management information is include in a MAC frame, the information may be included in the header or the body of the MAC frame.

### BRIEF DESCRIPTION OF THE DRAWINGS

A more detailed understanding may be had from the following description, given by way of example in conjunction with the accompanying drawings wherein:
FIG. 1 shows an example communication system 100 wherein Very High Throughput (VHT) control information may be communicated;
FIG. 2 shows an example MAC frame that may be used to communicate VHT control information;
FIG. 3 shows an example MAC Control Wrapper frame that may be used to communicate VHT control information;
FIG 4. shows a second example MAC Control Wrapper frame that may be used to communicate VHT control information;
FIG 5. shows a further example MAC Action frame 500 that may be used to communicate the VHT control information;
FIG. 6 shows a second example communication system wherein VHT control information may be communicated; and
FIG. 7 shows an example Access Point (AP) and an example wireless transmit/receive unit (WTRU).

### DETAILED DESCRIPTION

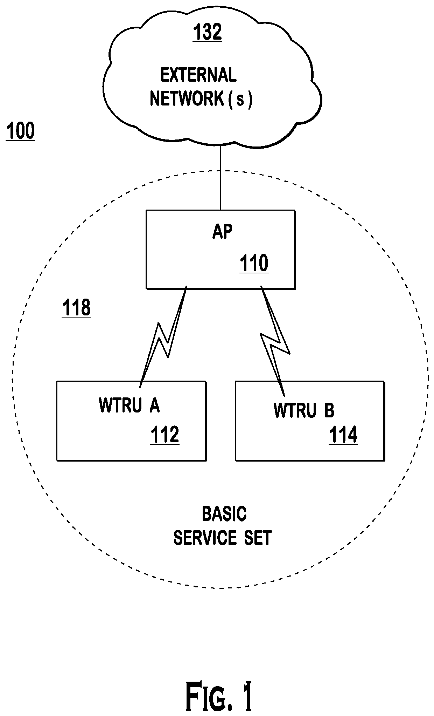

FIG. 1 shows an example communication system 100 wherein very high throughput (VHT) features and related control signaling may be implemented. The communication system includes an Access Point (AP) 110, two wireless transmit/receive units (WTRUs) (WTRU A 112 and WTRU B 114), and one or more external networks 132.

The AP 110 may communicate wireless data to and from WTRU A 112 and WTRU B 114 via an air interface, thereby forming a Basic Service Set (BSS) 118. The one or more external networks 132 may include, for example, the Internet, one or more private wired local are networks (LANs), one or more public switch telephone networks (PSTN), one or more cellular core networks, and/or any other type of wired or wireless network. To receive data from the external networks 132, WTRU A 112 may communicate via the air interface to the AP 110, which may communicates to/from the external networks 132. WTRU B 114 may communicate with the external networks 132 in a similar fashion.

The air interface implemented by AP 110, WTRU A 112, and WTRU B 114 may be based on technologies such as Institute of Electrical and Electronics Engineers (IEEE) 802.11a, IEEE 802.11b, IEEE 802.11g, IEEE 802.11n, IEEE 802.11ac, and/or IEEE 802.11ad technologies. IEEE 802.11ac and IEEE 802.11ad are technologies which include the use of VHT features such Multi-User Multiple Input and Multiple Output (MU-MIMO), multi-channel transmission/reception, and/or other features. IEEE 802.11ad describes wireless communications in the sixty GHz band, while IEEE 802.11ac describes wireless communications at frequencies less than six GHz. The WTRUs 112, 114 may communicate with the AP 110 using VHT features such as those specified in IEEE 802.11ac and/or IEEE 802.11ad. As will be described in further detail below, the WTRUs 112, 114 may transmit and receive messages to/from the AP 110 that include control information related to these VHT features, as well as other IEEE 802.11ac and/or IEEE 802.11ad features. As used herein, the term "VHT Control information" includes but is not limited to information that relates to the control or management of features such as those used in a wireless network based on IEEE 802.11ac or IEEE 802.11ad technology.

WTRU A 112 and the AP 110 may communicate VHT control information related to transmit power control. The AP 110 may send WTRU A 112 information that includes one or any combination of the following: maximum, minimum, current or instantaneous transmit power information; information on a level change or a step change in transmit power; frequency information that relates to a channel and/or bandwidth configuration; timing information such as time stamps and timers for measurements, timers for information validity, and/or time for making changes in power or power parameters; or regulatory information that describes allowed channels, bandwidths, and/or powers levels. WTRU A 112 may send the AP 110 information that includes one or any combination of the following: a request for transmit power control information; Link Margin measurement information, wherein a Link Margin is a ratio of receive signal power to the minimum power that may be required by WTRU A 112 or the AP 110, and wherein the receive signal is determined based on channel conditions, interference, and/or data rates; or path loss measurement information. This transmit power control information may be exchanged between an AP and a STA in the context of MU-MIMO, or any other appropriate context.

WTRU A 112 and the AP 110 may also communicate VHT control information related to receive power control. For example, the AP 110 may send WTRU A 112 information that includes one or any combination of the following: frequency information that relates to a channel and/or bandwidth configuration; timing information such as time stamps and timers for measurements, timers for information validity, and/or time for making changes in power or power parameters; regulatory information that describes allowed channels, bandwidth, and/or power levels; or receive power control information in the form of rules, parameters, settings, indications and measurements for use with Energy Detect, Carrier Sense, and Clear Channel Assessment (ED/CS/CCA) mechanisms. Alternatively or additionally, the WTRU 112 may send requests to the AP 110 to receive the above-described information, and the AP 110 may transmit the above-described information in response to the requests.

WTRU A 112 and the AP 110 may also communicate VHT control information related to time synchronization. For example, WTRU A 112 may send the AP 110 information that is a request for transmit time synchronization information. The request may include associated control parameters. Further, the request may indicate a request for specific time synchronization control parameters to be included in a response to the request. In response to the request, the AP 110 may send WTRU A 112 a transmit time synchronization correction information report and associated control parameters. The associated control parameters may include the parameters indicated in the request for time synchronization information. Alternatively or additionally, in an instance where the request does not indicate a request for specific time synchronization control parameters, the associated control parameters may include any appropriate parameters related to time synchronization. This time synchronization information may be communicated between the AP 110 and WTRU A 112 in the context of uplink MU-MIMO, or in any other appropriate context.

WTRU A 112 and the AP 110 may also communicate VHT control information related to frequency offset estimates. For example, WTRU A 112 may send the AP 110 information that is a request for frequency offset information. The request may include associated control parameters. Further, the request may indicate a request for specific control parameters to be included in a response to the request. In response the AP 110 may send a frequency offset estimate report. The report may include associated control parameters, which may include the control parameters specified in the request. This frequency offset estimate information may be communicated between the AP 110 and WTRU A 112 in the context of uplink MU-MIMO, or in any other appropriate context.

WTRU A 112 and the AP 110 may also communicate VHT control information related to Orthogonal Frequency Division Multiple Access (OFDMA) uplink sub-carrier allocation. When OFDMA is used, the AP 110 may allocate uplink sub-carriers that WTRUs (such as WTRU A 112 and/or WTRU B 114) may use to transmit to the AP 110 on the uplink. WTRU A 112 may communicate a request for an uplink OFDMA sub-carrier allocation to the AP 110. The AP 110 may transmit information to WTRU A 112 that describes an uplink subcarrier allocation for WTRU A 112. Alternatively or additionally, the AP 110 may organize OFDMA uplink sub-carriers into groups, and assign an index to each group. In such an instance, the AP 110 may transmit information to WTRU A 112 that indicates the index of a group of uplink subcarriers that the WTRU A 112 is permitted to use.

WTRU A 112 and the AP 110 may also communicate VHT control information related to OFDMA downlink sub-carrier allocation. When OFDMA is used, the AP 110 may allocate downlink sub-carriers that WTRUs (such as WTRU A 112 and/or WTRU B 114) may use to receive data from the AP 110 on the downlink. WTRU A 112 may transmit a request to the AP 110 to allocate one or more sub-carriers for WTRU A 112. Further, WTRU A 112 may transmit a request to the AP 110 for information that describes current sub-carrier allocations; the AP 110 may, in response to the request, transmit the requested information to WTRU A 112. Alternatively or additionally, the AP 110 may organize OFDMA downlink sub-carriers into groups, and assign an index to each group. In such an instance, the AP 110 may transmit information to WTRU A 112 that indicates the index of a group of uplink subcarriers that the WTRU A 112 is permitted to use.

WTRU A 112 and the AP 110 may also communicate VHT control information that relates at the same time to both OFDMA downlink sub-carrier allocation and OFDMA downlink sub-carrier allocation. For example, WTRU A 112 may transmit a request for both uplink and downlink allocations to the AP 110; in response to the request, the AP 110 may allocate uplink and downlink sub-carriers for WTRU A 112. Further, WTRU A 112 may transmit a request for information that describes both uplink and downlink OFDMA sub-carrier allocations to the AP 110; in response to the request, the AP 110 may transmit the requested information to WTRU A 112. Alternatively or additionally, the AP 110 may organize OFDMA downlink and uplink sub-carriers into groups, and assign an index to each group. In such an instance, the AP 110 may transmit information to WTRU A 112 that indicates the index of a group of uplink and/or downlink subcarriers that the WTRU A 112 is permitted to use.

WTRU A 112 and the AP 110 may also communicate VHT control information related to Channel State Information (CSI). For example, WTRU A 112 may transmit a request for CSI feedback to the AP 110, and the AP 110 may transmit a responsive CSI Report to WTRU A 112. Alternatively or additionally, the AP 110 may transmit a request for CSI feedback to WTRU A 112, and WTRU A 112 may transmit a responsive CSI Report to the AP 110. These CSI Reports may be included in VHT CIS MAC Action frames, or in any other appropriate format.

WTRU A 112 and the AP 110 may also communicate VHT control information related to beamforming. WTRU A 110 may transmit a request for beamforming feedback to the AP 110, which may transmit responsive information to WTRU A 110. Alternatively or additionally, the AP 110 may transmit a request for beamforming feedback to WTRU A 110, which may transmit responsive information to the AP 110. The information related to beamforming may relate to compressed beamforming and/or to non-compressed beamforming. As an example, WTRU A 110 or the AP 110 may receive a request for compressed beamforming feedback, and may transmit a responsive Compressed Beamforming Report. The Compressed Beamforming Report may be included in a VHT Compressed Beamforming MAC Action frame. As a further example, WTRU A 110 or the AP 110 may receive a request for non-compressed beamforming feedback, and transmit a responsive Non-Compressed Beamforming Report. The Non-Compressed Beamforming Report may be included in a VHT Non-compressed Beamforming MAC Action frame.

WTRU A 112 and the AP 110 may also communicate VHT control information related to antenna selection indices. For example, WTRU A 112 may transmit an Antenna Selection Indices feedback request to the AP 110, and the AP 110 may transmit a responsive Antenna Selection Indices Report to WTRU A 112. Alternatively or additionally, the AP 110 may transmit an Antenna Selection Indices feedback request to WTRU A 112, and WTRU A 112 may transmit a responsive Antenna Selection Indices Report to the AP 110. An Antenna Selection Indices Report transmitted by WTRU A 112 and/or the AP may be included in, for example, a VHT Antenna Selection Indices Feedback MAC Action frame.

WTRU A 112 and the AP 110 communicate VHT control information related to link adaptation. For example, WTRU A 112 may transmit one or any combination of the following to the AP 110, and/or the AP 110 may transmit one or any combination of the following to WTRU A 112: a request for communication parameters that may be used for link adaptation; a training request that indicate a request to transmit a sounding packet; a modulation coding set (MCS) feedback request; a data rate feedback request; a sequence number or identifier for MCS feedback; a VHT transmit/receive antenna selection request; or VHT transmit/receive antenna training control information. The AP 110 may transmit responsive information to WTRU A 112, and/or WTRU A 112 may transmit responsive information to the AP 110. The responsive information may include, for example: a sounding packet; a MCS feedback response report; a data rate feedback report; or a VHT transmit/receive antenna selection report.

WTRU A 112 and the AP 110 may also communicate VHT control information related to multi-channel transmission that includes the communication of data on parallel channels. For example, WTRU A 112 may transmit one or any combination of the following to the AP 110, and/or the AP 110 may transmit one or any combination of the following to WTRU A 112: synchronization information related to parallel channel transmission; or link adaptation information such as MCS feedback requests/responses for parallel channels.

WTRU A 112 and the AP 110 communicate VHT control information related to the use of MU-MIMO in the downlink. For example, the AP 110 may transmit information to WTRU A 112 that relates to one or any combination of: acknowledgment mechanisms and parameters; link adaptation parameters such as MCS feedback; or channel sounding mechanism parameters.

WTRU A 112 and the AP 110 may also communicate VHT control information related to the use of MU-MIMO in the uplink. For example, WTRU A 112 may transmit information to the AP 110 that relate to one or any combination of: acknowledgement mechanisms and parameters; link adaptation parameters such as MCS feedback; or channel sounding mechanism parameters.

WTRU A 112 and the AP 110 may also communicate VHT control information related to Reverse Direction Grant (RDG) parameters. For example, the AP 110 may transmit a grant indication to WTRU A 112. The grant indication may include duration information. Alternatively or additionally, WTRU A 112 may transmit a grant indication that includes duration information to the AP 110. The AP 110 and/or WTRU A 112 may transmit a grant indication in, for example, a Duration/ID field in a header in a MAC frame.

WTRU A 112 and the AP 110 may also communicate VHT control information related to RDG in the context of MU-MIMO. For example, WTRU A 112 may transmit one or any combination of the following to the AP 110, and/or the AP 110 may transmit one or any combination of the following to WTRU A 112: information that indicates an RDG grant for MU-MIMO in the downlink; information that indicates an RDG grant for MU-MIMO in the uplink. In an instance where the information relates to an RDG grant for MU-MIMO in the uplink, the information may include: control parameters and information for time synchronization; control parameters and information related to a frequency offset; and/or control parameters and information for power control.

WTRU A 112 and the AP 110 may also communicate VHT control information related to RDG parameters in the context of OFDMA. For example, WTRU A 112 may transmit one or any combination of the following to the AP 110, and/or the AP 110 may transmit one or any combination of the following to WTRU A 112: information that indicates an RDG grant in an OFDMA downlink; information that indicates an RDG grant in an OFDMA uplink direction. In an instance where the information relates to an RDG grant for an OFDMA uplink, the information may include: control parameters and information for time synchronization; control parameters and information related to a frequency offset; and/or control parameters and information for power control.

WTRU A 112 and the AP 110 may also communicate VHT control information related to RDG parameters in the context of Access Category Restrictions. For example, WTRU A 112 may transmit one or any combination of the following to the AP 110, and/or the AP 110 may transmit one or any combination of the following to WTRU A 112: information that indicates an RDG grant, whereby data frames may be sent from any Traffic Identifier (TID); an RDG grant, whereby only data frames maybe sent that are in a specified Access Category, have a specific media access or transmission priority, or correspond to a certain data type (e.g., voice, video, web browsing traffic); or RDG responder information that indicates whether more packets are expected to follow the current packet or not.

WTRU A 112 and the AP 110 may also communicate VHT control information related to calibrations for VHT communications between WTRU A 112 and the AP 110. Calibration is a process by which WTRU A 112 and AP 110 exchange information related to their respective radio capabilities and determine differences in their radio capabilities. Based on the differences, a correction factor may be determined that may be used to configure WTRU A 112 and the AP 110 for subsequent communications. In the context of VHT calibration, WTRU A 112 may transmit one or any combination of the following to the AP 110, and/or the AP 110 may transmit one or any combination of the following to WTRU A 112: an indication of a start of calibration; an indication of a calibration sounding response; an indication of an end of a calibration; or a calibration sequence identifier.

WTRU A 112 and the AP 110 may also communicate VHT control information related to group assignments for WTRUs. WTRUs may be assigned to one or more groups based on parameters that relate to MU-MIMO, beamforming, OFDMA, multicast, power-saving, or other features. In the context of power saving, as an example, the AP 110 may group WTRUs based on battery capabilities. In the context of MU-MIMO, the AP 110 may group WTRUs based on the quality of radio links the different WTRUs are experiencing. WTRU A 112 may transmit VHT control information to the AP 110 such as a request to the AP 110 to be included in a group and/or to receive a group assignment. In response, the AP 110 may transmit group assignment information to WTRU A 112. The group assignment information may include, for example, a group identifier for a group to which WTRU A 112 has been assigned, and/or an address that is associated with the group to which WTRU A 112 has been assigned.

Although examples are provided above wherein the AP 110 transmits information to WTRU A 112, any type or sub-type of information described above as transmitted from the AP 110 to WTRU A 112 may also be transmitted from WTRU A 122 to the AP 110. Further, although examples are provided above wherein WTRU A 112 transmits information to the AP 110, any type or sub-type of information described above as transmitted from WTRU A 112 to the AP 110 may also be transmitted from the AP 110 to WTRU A 112.

In addition to communicating the VHT control information described above, WTRU A 112 and the AP 110 may perform actions based on the VHT control information. For example, when WTRU A 112 and the AP 110 communicate information related to transmit and/or receive power control as described above, WTRU A 112 and/or the AP 110 may adjust power levels based on the exchanged VHT control information. When WTRU A 112 and the AP 110 communicate VHT control information related to time synchronization and/or frequency offsets, WTRU A 112 and the AP 110 may use the exchanged VHT control information to synchronize their communications in the time and/or frequency domains. Analogous actions may also be performed by WTRU A 112 and/or the AP 110 for the other types of VHT control information described above.

Examples are provided above wherein WTRU A 112 and the AP 110 communicate VHT control information. Alternatively or additionally, VHT control information such as that described above may also be communicated between WTRB B 114 and the AP 110, and/or any other WTRUs (not depicted) which may be included in the BSS 118 and communicate with the AP 110. Alternatively or additionally, the VHT control information described above may also be communicated between WTRU A 112 and WTRU B 114.

The VHT control information described above as communicated between to/from the AP 110 and the WTRUs 112, 114 may be included in one or more fields. The fields may range in size from a single bit to any number of bits. The fields may be included in headers in MAC frames and/or in the bodies of MAC frames. Alternatively or additionally, the control information may be included in one or more fields in physical layer messages, in one or more fields in upper-layer messages, and/or in any combination of MAC frames, physical layer messages, upper-layer messages, and/or other types of messages.

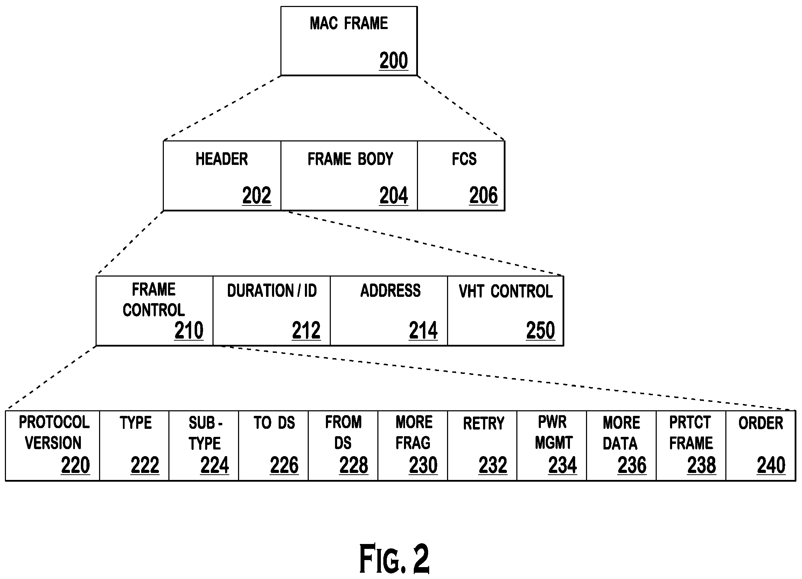

FIG. 2 shows an example MAC frame 200 that may be used to communicate the VHT control information described above with reference to FIG. 1. The MAC frame 200 may include a header 202, a frame body 204, and a Frequency Check Sequence (FCS) field 206. The MAC frame 200 may have a type, where the type describes the purpose of the frame 206. The MAC frame 200 may be, for example, a Control frame, a Data frame, or a Management frame, or a sub-type of a Control frame, Data frame, or Management frame.

The header 202 may include a Frame Control field 210, a Duration/ID field 212, an Address field 214, and a VHT control field 250. The header 202 may also include one or more additional fields (not depicted). For example, the header 202 may also include a Sequence Control field, High Throughput (HT) Control field, or other type of control field. In an instance where the header 202 includes an HT Control field, the HT Control field may be between the Address field 214 and the VHT Control field 250, to the right of the VHT Control field 250, or in any other place in the header 202.

The Duration/ID field 212 in the header 202 may include different values, depending upon the type of the MAC frame 200. For example, where the MAC frame 200 may include information related to an associate identifier (AID) of the device (an AP or WTRU) that transmitted the MAC frame 200, or may include a duration value that is based on the type of the MAC frame 200. The Address field 214 may indicate, for example, a MAC address of the device that is the intended recipient of the MAC frame 200.

The Frame Control field 210 in the header 202 may include one or more fields, such as the Protocol Version field 220, the Type field 222, the Sub-type field 224, the To DS field 226, the From DS field 228, the More Fragments field 230, the Retry field 232, the Power Management field 234, the More Data field 236, the Protected Frame field 238, and the Order field 240. The Protocol Version field 220 may indicate the communications standard by which the format of the MAC frame 200 is defined and/or communications standards with which the MAC frame is compatible. For example, the Protocol Version field 220 may indicate that the MAC frame 200 is defined according to IEEE 802.11n, IEEE 802.11ac, and/or IEEE 802.11ad technology. The Type field 222 and the Sub-type field 224 indicate the function of the MAC frame 200. For example, the Type field 222 may indicate that the MAC frame 200 is a Management frame, and the Sub-type may indicate that the MAC frame 200 is a particular sub-type of Management frame, such as a Probe Response frame. The To DS field 226 and From DS field 228 may indicate whether communication of the MAC frame 200 involves transmission via a distribution system. The More Fragments field 230 indicates whether the data in the MAC frame 200 is associated with related fragments of data (i.e., is part of the same data unit that will be transmitted in a subsequent frame. The Retry field 232 indicates whether the MAC frame 200 is a retransmission of an earlier frame. The Power Management field 234 may indicate the power saving mode (e.g., active or power-saving) of the source device of the MAC frame 200. In an instance where the MAC frame 200 is transmitted by an AP to a destination WTRU, the More Data field 236 indicates to the WTRU whether the AP has additional data to send to the WTRU (i.e., that more data is being buffered for the WTRU at the AP). The Protected Frame field 238 may indicate whether the frame body 204 in the MAC frame 200 has been processed by a cryptographic encapsulation algorithm. The Order field 240 may indicate whether strict frame ordering is being applied to the MAC frame 200.

The VHT control field 250 in the header 202 may include VHT control information. This information may include any type of information or combination of types of VHT control information described above with reference to FIG. 1. The presence of the VHT control field 250 in the MAC frame 200 may be indicated in a number of different ways. For example, in an instance where the MAC frame 200 is a Management frame or a Data frame, a value of one in the Order field 240 may indicate that the VHT control field 250 is present in the MAC frame 200. Alternatively or additionally, values in the Duration/ID field 212, and/or in any of the other sub-fields 220, 222, 224, 226, 228, 230, 232, 234, 236, 238 in the Frame Control field 210, values in the one or more additional fields (not depicted) in the header 202 may indicate that the VHT control field 250 is present in the MAC frame 200.

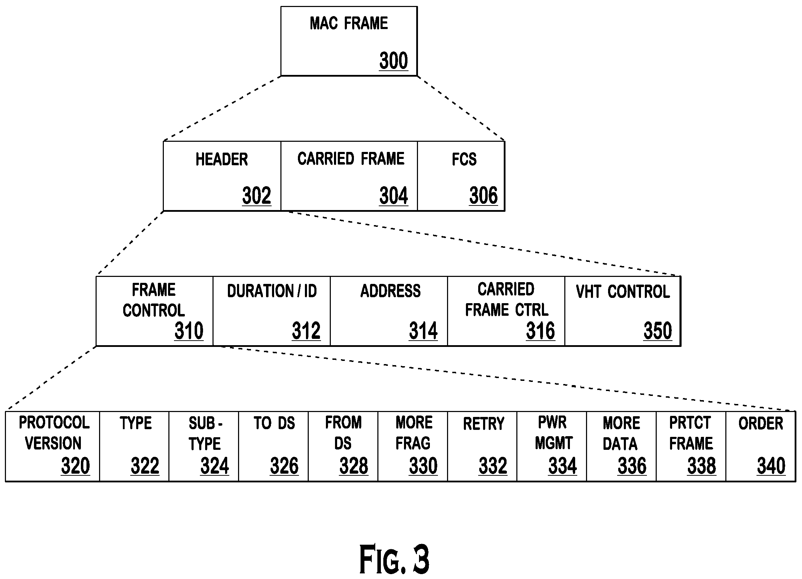

FIG. 3 shows an example MAC Control Wrapper frame 300 that may be used to communicate the VHT control information described above with reference to FIG. 1. The Control Wrapper frame 300 may include a header 302, a Carried Frame field 304, and a FCS field 306. The Control Wrapper frame 300 may be used to carry another MAC Control frame; the other MAC Control frame may be included in the Carried Frame field 304.

The header 302 of the Control Wrapper frame 300 may include a Frame Control field 310, a Duration/ID field 312, an Address field 314, Carried Frame Control Field 316, and a VHT control field 350. The fields 320, 322, 324, 326, 328, 330, 332, 334, 336, 338, 340 in the Frame Control field 310 may indicate similar information as corresponding fields 320, 222, 224, 226, 228, 230, 232, 234, 236, 238, 240 in the Frame Control field 210 of FIG. 2. The Duration/ID field 312 and Address field 314 in the header 302 may indicate similar information as corresponding fields 212, 214 in the header 202 of FIG. 2. The Carried Frame Control Field 316 may include control information related to the other MAC Control frame that is included in the Carried Frame field 304. The VHT control field 350 in the header 302 may include VHT control information. This information may include any type of VHT control information or combination of types of VHT control information described above with reference to FIG. 1.

The Type field 322 and Sub-type field 322 indicate, respectively, the type of and sub-type of the MAC Control Wrapper frame. According to IEEE 802.11, a Type value of "01" indicates that a frame is a Control frame. IEEE 802.11n defines the Control Wrapper frame subtype as a subtype of the Control frame, IEEE 802.11n describes that value of subtype value of "0111" indicates that a frame is a Control Wrapper frame. Accordingly, the value of the Type field 322 may be "01," and the value of the Sub-type field 324 may be "0111." As an alternative, the Control Wrapper frame 300 may be considered to be a "VHT Control Wrapper frame," which is a different subtype from the "Control Wrapper frame" subtype of 802.11n. In such an instance, the Type field 322 may have a value of "01," and the Sub-type field 324 may have a value that is not "0111," and that indicates that the Control Wrapper frame 300 is a VHT Control Wrapper frame.

Alternatively or additionally, the header 302 may also include a High Throughput (HT) Control field (not depicted), which may include control data related High Throughput features that are described in IEEE 802.11n. The HT Control field may be included, for example, between the Carried Frame Control field 316 and the VHT Control field 350. As an additional example, the HT Control field may be included to the right of the VHT Control field 350, at the end of the header 302. In an instance where the header 302 includes the HT Control field, the Sub-type field 324 may have a value that indicates that the frame is a Control Wrapper frame (i.e., a value of "0111"); alternatively, the Sub-type field 324 may have a value that indicates that the frame is a VHT Control Wrapper frame.

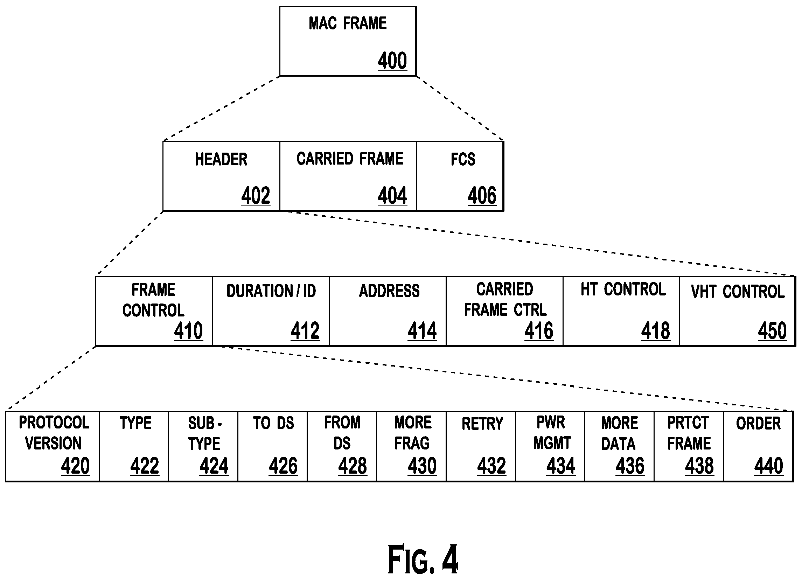

FIG. 4 shows a second example MAC Control Wrapper frame 400 that may be used to communicate the VHT control information described above with reference to FIG. 1. The Control Wrapper frame 400 may include a header 402, a Carried Frame field 404, and a FCS field 406. The MAC Control Wrapper frame 400 may be used to carry another MAC Control frame; the other MAC Control frame may be included in the Carried Frame field 404.

The header 402 of the MAC Control Wrapper frame 400 may include a Frame Control field 410, a Duration/ID field 412, an Address field 414, Carried Frame Control Field 416, and VHT control field 450, and a High Throughput (HT) Control field 418. The fields 420, 422, 424, 426, 428, 430, 432, 434, 436, 438, 440 in the Frame Control field 410 may indicate similar information as corresponding fields 320, 322, 324, 326, 328, 330, 332, 334, 336, 338, 340 in the Frame Control field 310 of FIG. 3. The Duration/ID field 412, Address field 414, and Carried Frame Control field 416 in the header 402 may indicate similar information as corresponding fields 312, 314, 316 in the header 302 of FIG. 3. The VHT control field 450 in the header 402 may include VHT control information. This information may include any type of VHT control information or combination of types of VHT control information described above with reference to FIG. 1. The HT Control field 418 may include control data related to HT features that are described in IEEE 802.11n. As a variation on the header 402 of FIG. 4, the VHT Control field 450 may be included between the Carried Frame Control field 416 and the HT Control Field 418.

The Sub-type field 424 in the Frame Control field 422 may have a value that indicates that the frame is a Control Wrapper frame (i.e., a value of "0111"). Alternatively, the Sub-type field 424 may have a value that indicates that the frame is a VHT Control Wrapper frame.

In addition or as alternatives to the MAC frames 200, 300, 400, 500 described above, the VHT control information described above with reference to FIG. 1 may be included in any type and/or sub-type of MAC frames. As an additional example, a VHT Control field may be included in a QoS Data frame (with a type value of "10" and a subtype value of "1000"), and/or in an Action No Ack frame (with a type value of "00" and a subtype value of "1110"). Further, an Action No Ack frame that includes a VHT Control field may be aggregated by a transmitting WTRU or AP with one or more other data frames, control frames, or management frames, and be transmitted in an aggregated data unit.

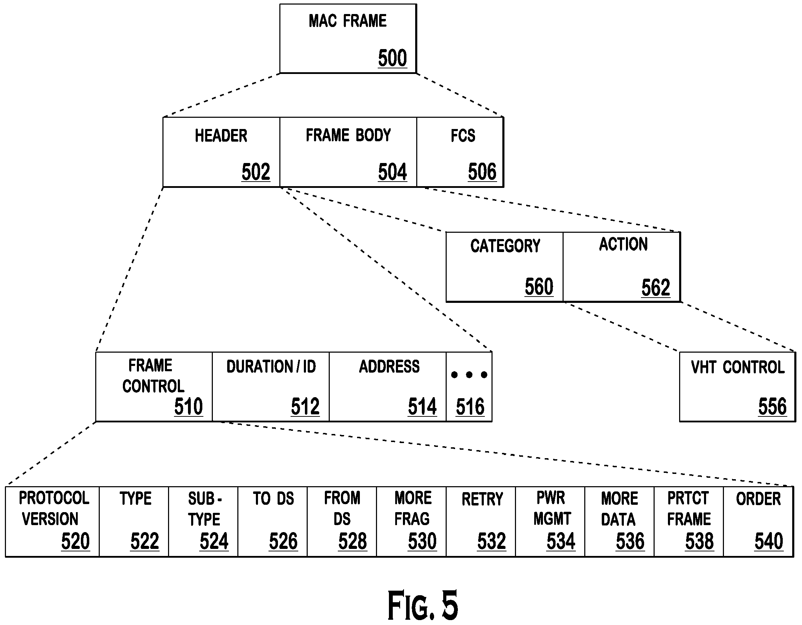

FIG. 5 shows a further example MAC Action frame 500 that may be used to communicate the VHT control information described above with reference to Figure 1. The Action frame 500 may include a header 502, a frame body 504, and a FCS field 506.

The header 502 of the Action frame 500 may include a Frame Control field 510, a Duration/ID field 512, an Address field 514, and one or more additional fields 516. The Duration/ID field 512 and Address field 514 may indicate similar information as corresponding fields 212, 214 in the header 202 of FIG. 2. The fields 520, 522, 524, 526, 528, 530, 532, 534, 536, 538, 540 in the Frame Control field 510 may indicate similar information as corresponding fields 220, 222, 224, 226, 228, 230, 232, 234, 236, 238, 240 in the Frame Control field 210 of FIG. 2. According to IEEE 802.11, a Type value of "00" indicates that a frame is a Management frame. Further according to IEEE 802.11, the Action frame is a subtype of the Management frame, and a Sub-type value of "1101" indicates that a frame is an Action frame. Accordingly, the value of the Type field 522 in the Frame Control field 510 may be "00," and the value of the Sub-type field 524 may be "1101."

The frame body 504 may include a Category field 560 and an Action field 562. The frame body may also include one or more additional fields (not depicted). The Action field 562 may include a VHT control field 250, and one or more additional fields (not depicted). The VHT control field 250 and/or the one or more additional fields (not depicted) may be or include one or more Information Elements (IEs). The value of the Category field 560 may indicate the type of action to which the Action frame 500 relates. For example, the Category field 560 may indicate that the Action frame 500 is a Spectrum Management Action frame, Quality of Service (QoS) Action frame, a Public Action frame, an HT Action frame, or other type of Action frame. The VHT control field 250 may include VHT control information. This information may include any type of information or combination of types of VHT control information described above with reference to Figure 1.

Further, although not shown in FIG. 5, the one or more additional fields 516 in the header 502 may also include one or more VHT control fields (not depicted) that include VHT control information. This information may include any type of information or combination of types of VHT control information described above with reference to Figure 1.

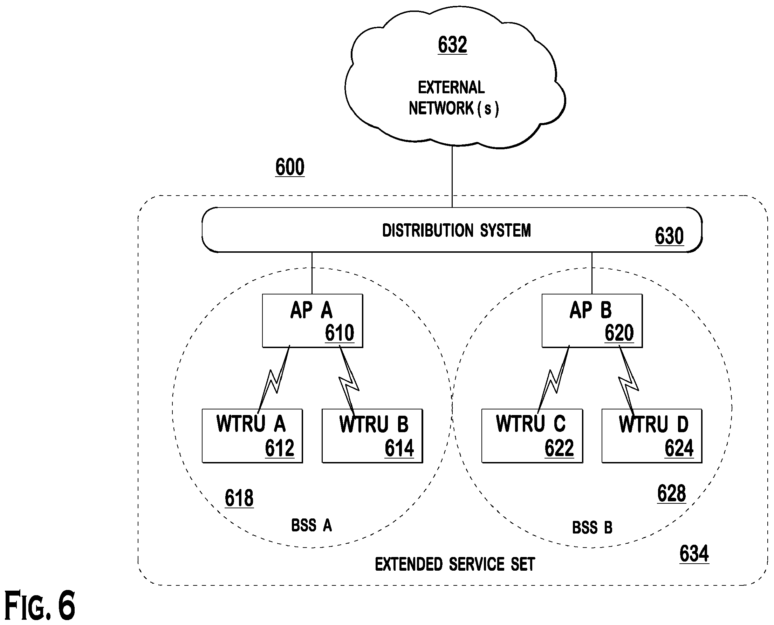

FIG. 6 shows a second example communication system 600 wherein control signaling related to VHT features may be implemented. The communication system includes two access points (APs) (AP A 610 and AP B 620), and four wireless transmit/receive units (WTRUs) (WTRU A 612, WTRU B 614, WTRUC 622, and WTRU D 624). The communication system 600 may also include a distribution system 630 and one or more external networks 632.

AP A 610 may communicate wireless data to and from WTRU A 612 and WTRU B 614 via an air interface, thereby forming Basic Service Set (BSS) A 618. AP B 620 may communicate wireless data to and from WTRU C 622 and WTRU D 624 via an air interface, thereby forming BSS B 628. AP A 610 and AP B 620 may communicate via the distribution system 630. The distribution system 630 may be, for example, an Ethernet network, a Wireless Distribution System (WDS), or any other appropriate network via which AP A 610 and AP B 620 may communicate. Together, the distribution system 630, BSSA 618, and BSS B 628 form the Extended Service Set (ESS) 634.

The one or more external networks 632 may include, for example, the Internet, one or more public switch telephone networks (PSTN), one or more cellular core networks, and/or any other type of wired or wireless network. To receive data from the external networks 632, WTRU A 612 may communicate via the air interface to AP A 610, which may communicates to/from the external networks 632 via the distribution system. WTRU B 614 may communicate with the external networks 632 in a similar fashion. WTRU C 622 and WTRU D 624 may communicate data to/from the external networks 632 in a similar fashion, via AP B 620 and the distribution system 630. The WTRUs 612, 614 in BSS A 618 may communicate with the WTRUs 622, 644 in BSS B 628 via their respective APs 610, 620 and the distribution system 630. Further, the WTRUs 612, 614, 622, 624 may roam between the two APs 610, 620.

The air interfaces implemented by AP A 610, AP B 620, WTRU A 612, WTRU B 614, WTRU C 622, and/or WTRU D 624 may be based on, for example, technologies such as Institute of Electrical and Electronics Engineers (IEEE), 802.11a, 802.11b, 802.11g, 802.11n, 802.11ac, and/or 802.11ad technologies.

The WTRUs 612, 614, 622, 624 may communicate with their respective APs 610, 620 using VHT features such as those described above. The WTRUs 612, 614, 622, 624 may transmit and receive messages to/from their respective APs 610, 620 that include control information related to these VHT features. For example, each or any of the WTRUs 612, 614, 622, 624 and the APs 610, 620 may communicate VHT control information as described above as performed by the WTRUs 122, 144 and the AP 110 of FIG. 1. Alternatively or additionally, each or any of the WTRUs 612, 614, 622, 624 and the APs 610, 620 may communicate VHT control information using any or any combination of the MAC frames 200, 300, 400, 500 described above with reference to FIG. 2 through FIG. 5.

In a variation on the communication systems 100, 600 of FIG. 1 and FIG. 6, a BSS may operate as an independent BSS (IBSS), which contains no APs. In such an instance, WTRUs (with characteristics such as those of WTRU A 112, WTRU B 114, WTRU A 612, WTRU B 614, WTRU C 622, and/or WTRU D 624), may communicate directly with each other in an ad hoc mode. In addition or as an alternative to the communications in BSSs 118, 618, 628 described above, the VHT control information described above may also be communicated directly between WTRUs in an IBSS.

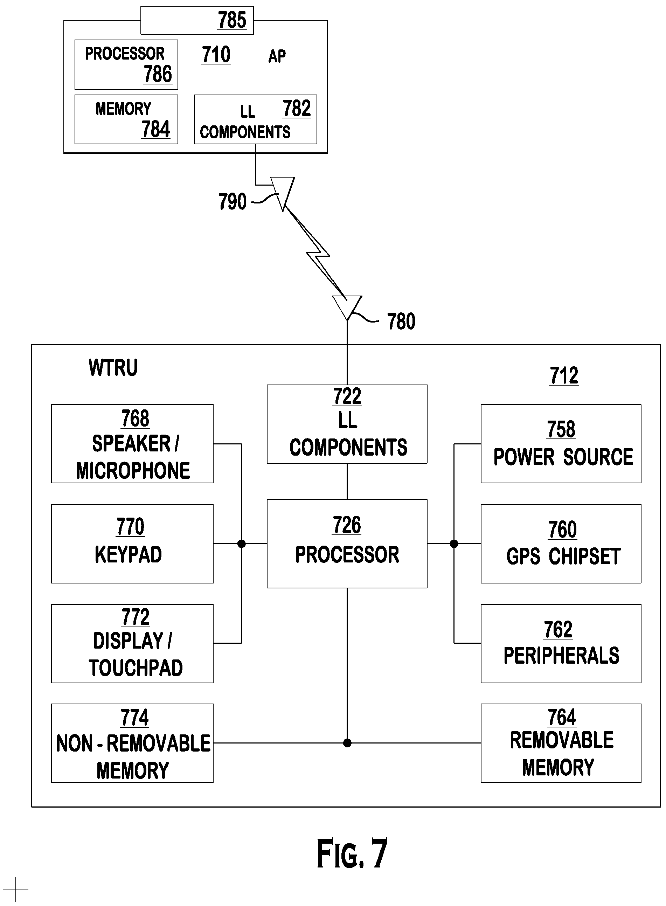

FIG. 7 shows an example AP 710 and WTRU 712 which may implement the features described above with reference to FIG. 1 through FIG. 6. The WTRU 712 may be any type of device configured to operate and/or communicate in a wireless environment. The AP 710 may be any type of device configured to wirelessly interface with the WTRU 712. By way of example, the AP 710 may be a base transceiver station (BTS), a Node-B, an eNode B, a Home Node B, a Home eNode B, a site controller, a wireless router, a macrocell base station, a picocell base station, a femtocell base station, or the like.

The AP 710 may be part of an ESS (not depicted) or a RAN (not depicted). A RAN to which the AP is connected may also include other APs and/or network elements (not shown), such as a base station controller (BSC), a radio network controller (RNC), relay nodes, or other elements. The AP 710 may be configured to transmit and/or receive wireless signals within a particular geographic region, which may be referred to as a cell or WLAN.

The AP 710 may communicate with the WTRU 712 over an air interface, which may be any suitable wireless communication link (e.g., radio frequency (RF), microwave, infrared (IR), ultraviolet (UV), visible light, etc.). The air interface may be established using any suitable radio access technology. For example, the air interface may be based on a technology that employs one or more channel access schemes, such as CDMA, TDMA, FDMA, OFDMA, SC-FDMA, or the like. For example, the AP 710 and the WTRU 712 may implement a radio technology such as UTRAN, which may establish the air interface using Wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA). Alternatively, the AP 710 and the WTRU 712 may implement a radio technology such as Evolved UMTS Terrestrial Radio Access (E-UTRA), which may establish the air interface using Long Term Evolution (LTE) and/or LTE-Advanced (LTE-A). Alternatively, the AP 710 and the WTRU 712 may implement radio technologies such as IEEE 802.16 (i.e., Worldwide Interoperability for Microwave Access (WiMAX)), CDMA2000, CDMA2000 7X, CDMA2000 EV-DO, Interim Standard 2000 (IS-2000), Interim Standard 95 (IS-95), Interim Standard 856 (IS-856), GSM, Enhanced Data rates for GSM Evolution (EDGE), GERAN, MBMS, MediaFLO, DVB-H, SHF, Advanced Television Systems Committee - Mobile/Handheld (ATSC-M/H), Digital Terrestrial Multimedia Broadcast (DTMB), or the like. Alternatively, the AP 710 and the WTRU 712 may implement a radio technology such as IEEE 802.15 to establish a wireless personal area network (WPAN). Alternatively, the AP 710 and the WTRU 712 may implement an air interface based on technologies such as IEEE 802.11a, IEEE 802.11b, IEEE 802.11g, IEEE 802.11n, IEEE 802.11ac, and/or IEEE 802.11ad.

As described above, the AP 710 may be included in a RAN (not depicted), which may be in communication with a core network (not depicted). The core network may be any type of network configured to provide voice, data, applications, and/or voice over internet protocol (VoIP) services to the WTRU 712. A core network to which the AP 710 is connected may also serve as a gateway for the WTRU 712 to access a Public Switched Telephone Network (PTSN), the Internet, and/or other networks. The PSTN may include circuit-switched telephone networks that provide plain old telephone service (POTS). The Internet may include a global system of interconnected computer networks and devices that use common communication protocols, such as the transmission control protocol (TCP), user datagram protocol (UDP) and the internet protocol (IP) in the TCP/IP internet protocol suite. Alternatively or additionally, the AP 710 may be included in an ESS, and may communicate with the Internet, the core network, and/or other APs (not depicted) via a distribution system.

Alternatively or additionally, in an instance where the air interface between the AP 710 and the AP 710 is based on an IEEE 802.11x technology, the WTRU 712 may communicate with a core network via the AP 710 and the Internet, using a technology such as Generic Access Network (GAN) technology. Or, in an instance where the air interface between the AP 710 and the WTRU 712 is based on an IEEE 802.11x technology, the WTRU 712 may communicate with the core network via the AP and the Internet, by communicating with a network element such as a Packet Data Gateway (PDG) or ePDG.

In addition to the components that may be found in a typical AP, the AP 710 may include a processor 786, a linked memory 784, one or more lower layer components 782, and one or more antennas 790. The one or more lower layer components 782 may be in communication with the processor 786 to facilitate the transmission of wireless data. The lower layer components 782 may transmit and/or receive wireless data via the one or more antennas 790.

The AP 710 may additionally include a communications interface 785. The communications interface 785 may be configured to transmit and/or receive data via a wired or wireless network, such as the core network, the Internet, and/or one or more other private or public networks. The communications interface 785, 795 may be or include a transceiver, and may be capable of communicating using technologies such as, for example, Ethernet, Carrier Ethernet, fiber optics, microwave, xDSL (Digital Subscriber Line), Asynchronous Transfer Mode, (ATM), Signaling System 7 (SS7), IP, and/or IP/Multiprotocol Label Switching (MPLS).

As shown in FIG. 7, the WTRU 712 may include a processor 726, one or more lower layer components 722, one or more transmit/receive elements 780, a speaker/microphone 768, a keypad 770, a display/touchpad 772, non-removable memory 774, removable memory 764, a power source 758, a global positioning system (GPS) chipset 760, and other peripherals 762. The WTRU 712 may include any sub-combination of the foregoing elements while remaining consistent with an embodiment.

The processor 726 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 726 may perform signal coding, data processing, power control, input/output processing, and/or any other functionality that enables the WTRU 712 to operate in a wireless environment. The processor 726 may be coupled to the one or more lower layer components 722, which may be coupled to the one or more transmit/receive elements 780. While FIG. 7 depicts the processor 726 and lower layer components 722 as separate components, the processor 726 and one or more of the lower layer components 722 may be integrated together in an electronic package or chip.

The processor 726 of the WTRU 712 may be coupled to, and may receive user input data from, the speaker/microphone 768, the keypad 770, and/or the display/touchpad 772 (e.g., a liquid crystal display (LCD) display unit or organic light-emitting diode (OLED) display unit). The processor 726 may also output user data to the speaker/microphone 768, the keypad 770, and/or the display/touchpad 772. In addition, the processor 726 may access information from, and store data in, any type of suitable memory, such as the non-removable memory 774 and/or the removable memory 764. The non-removable memory 774 may include random-access memory (RAM), read-only memory (ROM), a hard disk, or any other type of memory storage device. The removable memory 732 may include a subscriber identity module (SIM) card, a memory stick, a secure digital (SD) memory card, and the like. In other embodiments, the processor 726 may access information from, and store data in, memory that is not physically located on the WTRU 712, such as on a server or a home computer (not shown).

The processor 726 may receive power from the power source 758, and may be configured to distribute and/or control the power to the other components in the WTRU 712. The power source 758 may be any suitable device for powering the WTRU 712. For example, the power source 758 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 726 may also be coupled to the GPS chipset 760, which may be configured to provide location information (e.g., longitude and latitude) regarding the current location of the WTRU 712. In addition to, or in lieu of, the information from the GPS chipset 760, the WTRU 712 may receive location information over the air interface from an AP (e.g., AP 710 or another AP (not depicted)) and/or determine its location based on the timing of the signals being received from two or more nearby APs. The WTRU 712 may acquire location information by way of any suitable location-determination method while remaining consistent with an embodiment.

The processor 726 may further be coupled to other peripherals 762, which may include one or more software and/or hardware modules that provide additional features, functionality and/or wired or wireless connectivity. For example, the peripherals 762 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

The one or more transmit/receive elements 780 may be configured to transmit signals to, and/or or receive signals from, a AP (e.g., the AP 710) over the air interface. For example, the transmit/receive elements 780 may be or include an antenna configured to transmit and/or receive RF signals. In another embodiment, the transmit/receive elements 780 may be or include an emitter/detector configured to transmit and/or receive IR, UV, or visible light signals, for example. In yet another embodiment, the transmit/receive elements 780 may be configured to transmit and receive both RF and light signals. The transmit/receive elements 780 may be configured to transmit and/or receive any combination of wireless signals. Further, the WTRU 712 may employ MIMO technology. Thus, in one embodiment, the WTRU 712 may include two or more transmit/receive elements 780 (e.g., multiple antennas) for transmitting and receiving wireless signals over the air interface.

The lower layer components 722 may be configured to modulate the signals that are to be transmitted by the transmit/receive elements 780 and to demodulate the signals that are received by the transmit/receive elements 780. As noted above, the WTRU 712 may have multi-mode capabilities. Thus, the lower layer components 722 may include multiple transceivers for enabling the WTRU 712 to communicate via multiple radio access technologies, such as UTRAN, LTE, LTE-A, IEEE 802.11x, DVB-H, or MediaFLO. Alternatively or additionally, the lower layer components 722 may include one or more multi-mode transceivers, wherein each multi-mode transceiver is capable of communicating via multiple radio access technologies such as those mentioned above.

The WTRU 712 may be configured to perform any action performed by any one or any combination of the WTRUs 112, 114, 612, 614, 622, 624 described above with reference to FIG. 1 through FIG. 6. For example, the processor 726 and/or the lower layer components 722 may be configured to generate, process, transmit, and/or receive any of the messages described above as transmitted, generated, processed, or received by any or any combination of the WTRUs 112, 114, 612, 614, 622, 624 described above with reference to FIG. 1 through FIG. 6. Further, the AP 710 may be configured to perform any action performed by any one or any combination of the APs 110, 610, 620 described above with reference to FIG. 1 through FIG. 6. For example, the processor 786 and/or the lower layer components 782 may be configured to generate, transmit, process, and/or receive any of the messages transmitted, generated, processed, or received by any or any combination of the APs 110, 610, 620 described above with reference to FIG. 1 through FIG. 6.

The WTRU 712 and the AP 710 may also be configured to operate in any number of frequency bands, including Television White Space (TVWS) bands. Further, the WTRU 712 and/or the AP 710 may implement ED/CS/CCA functionality, including but not limited to ED/CS/CCA features related to receive power control.

Although features and elements are described above in particular combinations, each feature or element can be used alone or in any combination with the other features and elements. For example, each feature or element as described above with reference to FIG. 1 through FIG. 7 may be used alone without the other features and elements or in various combinations with or without other features and elements. Sub-elements of the methods and features described above with reference to FIG. 1 through FIG. 7 may be performed in any arbitrary order (including concurrently), in any combination or sub-combination.

In addition, the methods described herein may be implemented in a computer program, software, or firmware incorporated in a computer-readable medium for execution by a computer or processor. Examples of computer-readable media include electronic signals (transmitted over wired or wireless connections) and other media such as but are not limited to a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

### EMBODIMENTS

1. A method for use in wireless communications, the method comprising:
   transmitting and/or receiving control and/or management information.
2. The method of embodiment 1, wherein the control and/or management information relates to one or more VHT features.
3. The method of any preceding embodiment, wherein the control and/or management information relates to one or more features that include: transmit power control; receive power control; time synchronization; frequency synchronization; frequency offset estimates; resource allocation; OFDMA sub-carrier allocation; CSI feedback; beamforming; link adaptation; antenna selection indices; multi-channel transmission; MU-MIMO; group assignments; RDG parameters; Access Category Restrictions; communication calibration.
4. The method of any preceding embodiment, wherein the control and/or management information includes information related to one or more of: maximum, minimum, current or instantaneous transmit power information; information on a level change or a step change in transmit power; frequency information that relates to a channel and/or bandwidth configuration; timing information such as time stamps and timers for measurements, timers for information validity, and/or time for making changes in power or power parameters; or regulatory information that describes allowed channels, bandwidths, and/or powers levels; a request for transmit power control information; Link Margin measurement information; or path loss measurement information.
5. The method of any preceding embodiment, wherein the control and/or management information includes information related to one or more of: frequency information that relates to a channel and/or bandwidth configuration; timing information such as time stamps and timers for measurements, timers for information validity, and/or time for making changes in power or power parameters; regulatory information that describes allowed channels, bandwidth, and/or power levels; or receive power control information in the form of rules, parameters, settings, indications and measurements for use with ED/CS/CCA mechanisms.
6. The method of any preceding embodiment, wherein the control and/or management information includes information related to one or more of: a request for transmit time synchronization information; control parameters associated with a request for transmit time synchronization information; transmit time synchronization correction information report; or control parameters associated with a transmit time synchronization correction information report.
7. The method of any preceding embodiment, wherein the control and/or management information includes information related to one or more of: a request for frequency offset; control parameters associated with a request for frequency offset information; a frequency offset estimate report; control parameters associated with a frequency offset estimate report.
8. The method of any preceding embodiment, wherein the control and/or management information includes information related to one or more of: a request for an uplink OFDMA sub-carrier allocation; information that describes an uplink OFDMA sub-carrier allocation; or information that indicates an index of uplink subcarriers that a WTRU is permitted to use.
9. The method of any preceding embodiment, wherein the control and/or management information includes information related to one or more of: a request for an downlink OFDMA sub-carrier allocation; information that describes an downlink OFDMA sub-carrier allocation; or information that indicates an index of downlink subcarriers that a WTRU is permitted to use.
10. The method of any preceding embodiment, wherein the control and/or management information includes information related to one or more of: a request for CSI feedback; a CSI Report that is responsive to a request for CSI feedback.
11. The method of any preceding embodiment, wherein the control and/or management information includes information related to one or more of: a request for compressed or non-compressed beamforming feedback; a message that includes compressed or non-compressed beamforming feedback information; a Compressed Beamforming report; or a Non-Compressed Beamforming Report.
12. The method of any preceding embodiment, wherein the control and/or management information includes information related to one or more of: an antenna selection indices feedback request; or an antenna selection indices report.
13. The method of any preceding embodiment, wherein the control and/or management information includes information related to one or more of: a request for communication parameters that may be used for link adaptation; a training request that indicate a request to transmit a sounding packet; a modulation coding set (MCS) feedback request; a data rate feedback request; a sequence number or identifier for MCS feedback; a transmit/receive antenna selection request; transmit/receive antenna training control information; a sounding packet; a MCS feedback response report; a data rate feedback report; or a transmit/receive antenna selection report.
14. The method of any preceding embodiment, wherein the control and/or management information includes information related to one or more of: synchronization information related to parallel channel transmission; or link adaptation information related to parallel channel transmission; an MCS feedback request related to parallel channel transmission; or an MCS feedback response related to parallel channel transmission.
15. The method of any preceding embodiment, wherein the control and/or management information includes information related to one or more of: acknowledgment mechanisms or parameters related to MU-MIMO communication in the uplink or in the downlink; link adaptation parameters related to MU-MIMO communication in the uplink or the downlink; or channel sounding mechanism parameters related to MU-MIMO communication in the uplink or the in the downlink.
16. The method of any preceding embodiment, wherein the control and/or management information includes information related to one or more of: an RDG grant indication; or an RDG grant indication that includes duration information.
17. The method of any preceding embodiment, wherein the control and/or management information includes information related to one or more of: information that indicates an RDG grant for OFDMA communications in the downlink or the uplink; control parameters for time synchronization related to an RDG grant for OFDMA communications in the downlink or the uplink; or control parameters related to a frequency offset and/or to power control related to an RDG grant for OFDMA communications in the downlink or the uplink.
18. The method of any preceding embodiment, wherein the control and/or management information includes information related to one or more of: information that indicates an RDG grant, whereby data frames may be sent from any Traffic Identifier (TID); information that indicates an RDG grant, whereby only data frames maybe sent that are in a specified Access Category, have a specific media access or transmission priority, or correspond to a certain data type; or RDG responder information that indicates whether more packets are expected to follow a current packet or not.
19. The method of any preceding embodiment, wherein the control and/or management information includes information related to one or more of: an indication of a start of calibration; an indication of a calibration sounding response; an indication of an end of a calibration; or a calibration sequence identifier.
20. The method of any preceding embodiment, wherein the control and/or management information includes information related to one or more of: as a request to be included in a group; a request for a group assignment; group assignment information; group assignment information, wherein the group assignment information includes a group identifier or an address that identifies a group to which a WTRU has been assigned.
21. The method of any preceding embodiment, wherein the control and/or management information includes information related to a group assignment, wherein the group assignment is based on one or more features that include: MU-MIMO; beamforming; OFDMA; multicast; or power-saving.
22. The method of any preceding embodiment, wherein the control and/or management information is included in one or more of:
   one or more fields in one or more physical layer messages;
   one or more fields in one or more MAC layer messages; and/or
   one or more fields in one or more upper-layer messages.
23. The method of any preceding embodiment, wherein the control and/or management information is included in a MAC frame.
24. The method of any preceding embodiment, wherein the control and/or management information is included in a MAC frame that includes a header, a frame body, and a FCS field.
25. The method of any preceding embodiment, wherein the control and/or management information is included in a MAC frame that includes a header, wherein the header includes one or more of: a Sequence Control field; an HT Control field; a VHT Control field; a Frame Control field; a Duration/ID field; or an Address field.
26. The method of any preceding embodiment, wherein the control and/or management information is included in a MAC frame that includes a header, wherein the header includes a Frame Control field, and wherein the Frame Control field includes one or more of: a Protocol Version field; a Type field; a Sub-type field; a To DS field; a From DS field; a More Fragments field; a Retry field; a Power Management field; a More Data field; a Protected Frame field; or an Order field.
27. The method of any preceding embodiment, wherein the control and/or management information is included in a message, and wherein the message is a physical layer message, a MAC frame, or an upper-layer message, and wherein the message includes one or more fields that indicate that the control and/or management information is included in the message.
28. The method of any preceding embodiment, wherein the control and/or management information is included in a message, and wherein the message is a physical layer message, a MAC frame, or an upper-layer message, and wherein the message includes one or more fields that indicate that VHT control and/or VHT management information is included in the message.
29. The method of any preceding embodiment, wherein the control and/or management information is included in a MAC frame, wherein the MAC frame is an Action frame, a Control frame, or a Management frame.
30. The method of any preceding embodiment, wherein the control and/or management information is included in a MAC frame, wherein the MAC frame is a Control Wrapper frame.
31. The method of any preceding embodiment, wherein the control and/or management information is included in a MAC frame that includes a header and a body, wherein the control and/or management information is included in the header of the MAC frame and/or is included in the body of the MAC frame.
32. The method of any preceding embodiment, wherein the control and/or management information is included in a MAC frame, wherein the MAC frame is an Action frame, wherein the Action frame includes a Category Field and an Action field, and wherein the control and/or management information is included in the Action field.
33. The method of any preceding embodiment, wherein the the control and/or management information is included in a MAC frame, wherein the MAC frame is an Action frame, and wherein the Action frame is a Spectrum Management Action frame, Quality of Service (QoS) Action frame, a Public Action frame, an HT Action frame, or a VHT Action frame.
34. The method of any preceding embodiment, wherein the control and/or management information is included in one or more VHT control fields.
35. The method of any preceding embodiment, wherein the transmitting and/or receiving control and/or management information is performed via a wireless network based on IEEE 802.11ac technology.
36. The method of any preceding embodiment, wherein the transmitting and/or receiving control and/or management information is performed via a wireless network based on IEEE 802.11ad technology.
37. The method of any preceding embodiment, wherein the control and/or management information is transmitted and/or received in a BSS and/or in an ESS.
38. The method of any preceding embodiment, wherein the control and/or management information is transmitted and/or received in the context of relay communications.
39. The method of any preceding embodiment, wherein the transmitting and/or receiving control and/or management information is performed via wireless network based on one or more of: WCDMA technology; HSPA technology; HSPA+ technology; E-UTRA technology; LTE technology; LTE-A technology; IEEE 802.16 technology; CDMA2000 technology; IS-2000 technology; GSM technology; GERAN technology; MBMS technology; MediaFLO technology; DVB-H technology; ATSC-M/H technology; DTMB technology; IEEE 802.15 technology; Bluetooth technology; IEEE 802.11g technology; or IEEE 802.11n technology.
40. A WTRU configured to perform the method of any one of embodiments 1-39.
41. A WTRU configured to perform the method of any one of embodiments 1-39, wherein the WTRU that includes one or more transceivers, wherein the one or more transceivers are configured to transmit and/or receive the control and/or management information.
42. A WTRU configured to perform the method of any one of embodiments 1-39, wherein the WTRU that includes one or more transceivers, wherein the one or more transceivers are configured to transmit and/or receive the control and/or management information, wherein the WTRU is an AP.
43. A WTRU configured to perform the method of any one of embodiments 1-39, wherein the WTRU that includes one or more transceivers, wherein the one or more transceivers are configured to transmit and/or receive the control and/or management information, wherein the WTRU is not an AP.
44. A wireless communication system that includes one or more of: the WTRU of embodiment 40; the WTRU of embodiment 41; the WTRU of embodiment 42; or the WTRU of embodiment 43.
45. A computer-readable medium computer-readable medium having processor-executable instructions stored thereon which, when executed by at least one processor, will cause the at least one processor to perform the method of any one of embodiments 1-39.

The following are further examples forming part of the description.
1. A method for use in a wireless transit/receive unit (WTRU), the method comprising:
   transmitting a first Media Access Control (MAC) frame to a second WTRU via an Institute of Electrical and Electronics Engineers (IEEE) 802.11ad network,
      wherein the first MAC frame is a request to synchronize communications with the second WTRU,
      wherein the first MAC frame includes one or more control parameters, and
      wherein the one or more control parameters include a time synchronization parameter;
   receiving a second MAC frame from the second WTRU via the IEEE 802.11ad network, wherein the second MAC frame is responsive to the first MAC frame; and
   synchronizing communications over the IEEE 802.11ad network with the second WTRU based on the one or more control parameters.
2. The method of item 1, wherein the one or more control parameters include a frequency offset parameter.
3. The method of item 1, wherein the first MAC frame or the second MAC frame is an Action frame.
4. The method of item 1, wherein the second WTRU is an Access Point (AP).
5. A wireless transit/receive unit (WTRU), the WTRU comprising:
   a transceiver configured:
   to transmit a first Media Access Control (MAC) frame to a second WTRU via an Institute of Electrical and Electronics Engineers (IEEE) 802.11ad network,
      wherein the first MAC frame is a request to synchronize communications with the second WTRU,
      wherein the first MAC frame includes one or more control parameters, and
      wherein the one or more control parameters include a time synchronization parameter;
   to receive a second MAC frame from the second WTRU via the IEEE 802.11ad network, wherein the second MAC frame is responsive to the first MAC frame; and
   to synchronize communications over the IEEE 802.11ad network with the second WTRU based on the one or more control parameters.
6. The WTRU of item 5, wherein the one or more control parameters include a frequency offset parameter.
7. The WTRU of item 5, wherein the first MAC frame or the second MAC frame is an Action frame.
8. The WTRU of item 5, wherein the second WTRU is an Access Point (AP).
9. A method for use in a wireless transit/receive unit (WTRU), the method comprising:
   receiving a first Media Access Control (MAC) frame from a second WTRU via an Institute of Electrical and Electronics Engineers (IEEE) 802.11ac network,
      wherein the first MAC frame is a request for link adaptation information;
   in response to the first MAC frame, transmitting a second MAC frame to the second WTRU via the 802.11ac network,
      wherein the second MAC frame includes a header,
      wherein the header includes a control field, and
      wherein the control field includes Very High Throughput (VHT) link adaptation information.
10. The method of item 9, wherein the header includes a field that indicates that Very High Throughput (VHT) control information is included in the header.
11. The method of item 9, wherein the VHT link adaptation information includes information that indicates a VHT Modulation Coding Set (MCS) used by the WTRU.
12. The method of item 9, wherein the VHT link adaptation information includes information that indicates a VHT data rate of the WTRU.
13. The method of item 9, wherein the second MAC frame is a Data frame or a Management frame.
14. The method of item 9, wherein the second MAC frame is a Control frame.
15. The method of item 14, wherein the second MAC frame is a Control Wrapper frame.

## Claims

1. A method comprising:
receiving a first Media Access Control (MAC) frame from a wireless transmit/receive unit (WTRU) via an Institute of Electrical and Electronics Engineers (IEEE) 802.11ac network, wherein the first MAC frame comprises a request for Very High Throughput (VHT) link adaptation information; and
in response to the received first MAC frame via the IEEE 802.11ac network, generating a second MAC frame, wherein the second MAC frame comprises a header, wherein the header comprises a control field, wherein the control field comprises Very High Throughput (VHT) control information, wherein the VHT control information comprises VHT link adaptation information and multi-channel transmission information, wherein the VHT link adaptation information comprises multiple-user multiple input multiple output (MU-MIMO) information, and wherein the multi-channel transmission information comprises information related to parallel channel transmission; and
transmitting the second MAC frame to the WTRU via the IEEE 802.11ac network.

2. The method of claim 1, wherein the VHT link adaptation information comprises information that indicates a feedback VHT -Modulation Coding Set (MCS).

3. The method of claim 1, wherein the VHT link adaptation information comprises information that indicates a VHT data rate.

4. The method of claim 1, wherein the second MAC frame is a Data frame or a Management frame.

5. The method of claim 1, wherein the second MAC frame is a Control frame.

6. The method of claim 1, wherein the second MAC frame is a Control Wrapper frame.

7. The method of claim 1, wherein the VHT control information further comprises channel bandwidth configuration information.

8. A first wireless transmit/receive unit (WTRU) comprising:
a receiver configured to receive a first Media Access Control (MAC) frame from a second WTRU via an Institute of Electrical and Electronics Engineers (IEEE) 802.11ac network, wherein the first MAC frame is a request for Very High Throughput (VHT) link adaptation information;
a processor configured to generate a second MAC frame in response to the received first MAC frame, wherein the second MAC frame includes a header, wherein the header comprises a control field, wherein the control field comprises Very High Throughput (VHT) control information, wherein the VHT control information comprises VHT link adaptation information and multi-channel transmission information, wherein the VHT link adaptation information comprises multiple-user multiple input multiple output (MU-MIMO) information, and wherein the multi-channel transmission information comprises information related to parallel channel transmission; and
a transmitter configured to transmit the second MAC frame to the second WTRU via the 802.11ac network in response to the first MAC frame.

9. The first WTRU of claim 8, wherein the VHT link adaptation information comprises information that indicates a feedback VHT-Modulation Coding Set (MCS).

10. The first WTRU of claim 8, wherein the VHT link adaptation information comprises information that indicates a VHT data rate.

11. The first WTRU of claim 8, wherein the second MAC frame is a Data frame or a Management frame.

12. The first WTRU of claim 8, wherein the second MAC frame is a Control frame.

13. The first WTRU of claim 8, wherein the second MAC frame is a Control Wrapper frame.

14. The first WTRU of claim 8, wherein the VHT control information further comprises channel bandwidth configuration information.
